# EUROPEAN PATENT APPLICATION

(11) **EP 3 686 971 A1**
(43) Date of publication of application: **29.07.2020**
(21) Application number: 18881819.9
(22) Date of filing: 08.11.2018
(51) Int. Cl.: H01M 4/36, H01M 4/525, H01M 4/505, H01M 4/485, C01G 53/00, H01M 10/052

(54) **CATHODE ACTIVE MATERIAL FOR SECONDARY BATTERY, PREPARATION METHOD THEREFOR, AND LITHIUM SECONDARY BATTERY COMPRISING SAME**

(30) Priority: 21.11.2017 KR 20170155468
(71) Applicant: LG Chem, Ltd., Seoul 07336 (KR)
(72) Inventor: KIM, Ji Hye, Daejeon 34122 (KR); JUNG, Wang Mo, Daejeon 34122 (KR); LEE, Dong Hun, Daejeon 34122 (KR); PARK, Sung Bin, Daejeon 34122 (KR); KIM, Dong Hwi, Daejeon 34122 (KR); CHO, Hyung Man, Daejeon 34122 (KR); HAN, Jung Min, Daejeon 34122 (KR)
(74) Representative: Hoffmann Eitle
(86) International application number: PCT/KR2018/013551
(87) International publication number: WO 2019/103363

(57) **Abstract**

The present invention relates to a positive electrode active material for a secondary battery, which includes a core part and a shell part formed around the core part. Here, the core part and the shell part include a lithium composite transition metal oxide including Ni and Co, and at least one or more selected from the group consisting of Mn and Al, and a ratio of the diameter of the core part to the total diameter of a particle of the positive electrode active material is 0.5 to 0.85, and the shell part has a concentration gradient such that a Ni concentration at the start point of the shell part near the core part is 30 mol% or higher than that at the end point of the shell part near the particle surface.

## Description

### [Technical Field]

### CROSS-REFERENCE TO RELATED APPLICATION

This application claims priority to and the benefit of Korean Patent Application No. 10-2017-0155468, filed on November 21, 2017, the disclosure of which is incorporated herein by reference in its entirety.

### Technical Field

The present invention relates to a positive electrode active material for a secondary battery, a method of preparing the same and a lithium secondary battery including the same.

### [Background Art]

Recently, with the rapid spread of electronic devices using batteries such as mobile phones, notebook computers, and electric vehicles, the demand for secondary batteries which have a small size and a light weight, and relatively high capacity has been rapidly increasing. Particularly, since a lithium secondary battery has a small size and a light weight, and a high energy density, it is attracting attention as a driving power source for portable devices. As a result, research and development efforts have been actively made to improve the performance of a lithium secondary battery.

A lithium secondary battery includes an organic electrolyte solution or a polymer electrolyte solution filled between the positive electrode and the negative electrode, which consist of an active material enabling the intercalation and deintercalation of a lithium ion, and produces electric energy through oxidation and reduction when a lithium ion is intercalated/deintercalated in/from the positive electrode and the negative electrode.

As a positive electrode active material of a lithium secondary battery, a compound of lithium cobalt oxide (LiCoO₂), lithium nickel oxide (LiNiO₂), lithium manganese oxide (LiMnO₂ or LiMn₂O₄), lithium ferric phosphate (LiFePO₄) or the like has been used. In addition, as a method of retaining an excellent reversible capacity of LiNiO₂ and improving low thermal stability, a lithium composite metal oxide in which some of nickel (Ni) is substituted with cobalt (Co) or manganese (Mn)/aluminum (Al) (hereinafter, simply referred to as a "NCM-based lithium composite transition metal oxide" or "NCA-based lithium composite transition metal oxide") has been developed. However, there is a limitation to the application of the previously developed NCM/NCA-based lithium composite transition metal oxides due to an insufficient capacity characteristic.

To improve the above-described problem, recently, there is on-going research on increasing a Ni content in an NCM/NCA-based lithium composite transition metal oxide. However, a high-Ni positive electrode active material having a high Ni content has problems of decreased structural stability and chemical stability, and rapidly decreased thermal stability as an active material.

Therefore, it is necessary to develop a high-Ni positive electrode active material which has high capacity and is excellent in structural, chemical and thermal stabilities.

### [Disclosure]

### [Technical Problem]

The present invention is directed to providing a positive electrode active material of a high-Ni-based lithium composite transition metal oxide having a high Ni concentration, which has high capacity, enhanced structural and chemical stabilities, and improved thermal stability.

### [Technical Solution]

The present invention provides a positive electrode active material for a secondary battery, which includes a core part and a shell part formed around the core part, wherein the core part and the shell part include a lithium composite transition metal oxide including Ni and Co, and at least one or more selected from the group consisting of Mn and Al. Here, the ratio of the diameter of the core part to the total diameter of the particle of the positive electrode active material is 0.5 to 0.85, and the shell part has a concentration gradient such that a Ni content at the start point of the shell part near the core part is 30 mol% or higher than that at the end point of the shell part near the particle surface.

In addition, the present invention provides a method of preparing a positive electrode active material for a secondary battery, which includes: forming a core part by coprecipitating a first precursor-forming solution including a Ni-containing starting material, a Co-containing starting material, and at least one or more selected from the group consisting of a Mn-containing starting material and an Al-containing starting material; forming a shell part by coprecipitating a second precursor-forming solution including a Ni-containing starting material, a Co-containing starting material, and at least one or more selected from the group consisting of a Mn-containing starting material and an Al-containing starting material, wherein the Ni-containing starting material has a lower concentration than that of the first precursor-forming solution; and forming a positive electrode active material including a lithium composite transition metal oxide by forming a positive electrode active material precursor including the core part and the shell part formed around the core part, mixing the positive electrode active material precursor with a lithium source, and calcining the mixture. Here, the ratio of the diameter of the core part to the total diameter of a particle of the positive electrode active material is 0.5 to 0.85, and the shell part has a concentration gradient such that a Ni concentration at the start point of the shell part near the core part is 30 mol% or higher than that at the end point of the shell part near the particle surface.

In addition, the present invention provides a positive electrode and a lithium secondary battery including the positive electrode active material.

### [Advantageous Effects]

According to the present invention, as a Ni content is further increased, a lithium composite transition metal oxide can have high capacity, enhanced structural stability and chemical stability, and improved thermal stability.

A lithium secondary battery produced using a positive electrode active material for a secondary battery according to the present invention can have enhanced charge/discharge capacity and an enhanced battery characteristic such as a lifespan characteristic.

### [Description of Drawings]

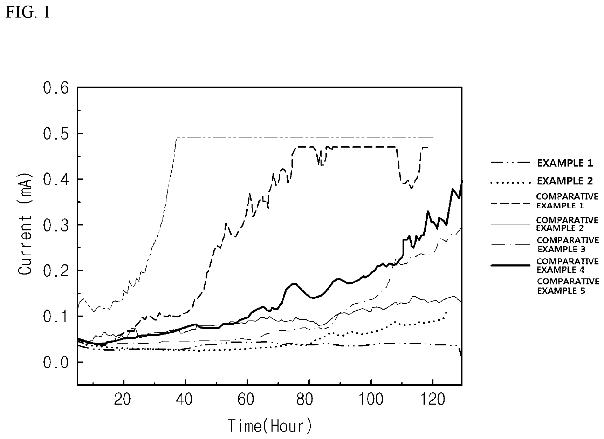

FIG. 1 is a graph of a leakage current versus time for lithium secondary batteries (full cells) using a positive electrode, which are produced according to examples and comparative examples.

### [Modes of the Invention]

Hereinafter, the present invention will be described in further detail to help understanding of the present invention. Here, terms and words used in the specification and claims should not be construed as limited to general or dictionary meanings, and should be interpreted with the meaning and concept in accordance with the technical idea of the present invention based on the principle that the inventors have appropriately defined the concepts of terms in order to explain the invention in the best way.

The positive electrode active material for a secondary battery of the present invention includes a core part and a shell part formed around the core part, wherein the core part and the shell part include a lithium composite transition metal oxide including Ni and Co, and at least one or more selected from the group consisting of Mn and Al. Here, the ratio of the diameter of the core part to the total diameter of a particle of the positive electrode active material is 0.5 to 0.85, and the shell part has a concentration gradient such that a Ni content at the start point of the shell part near the core part is 30 mol% or higher than that at the end point of the shell part near the particle surface.

The core part of the positive electrode active material of the present invention may include a high-Ni-based lithium composite transition metal oxide in which the content of Ni among the entire metal elements contained in the lithium composite transition metal oxide is 80 mol% or more. More preferably, in the core part, the content of Ni among the entire metal elements contained in the lithium composite transition metal oxide may be 88 mol% or more. Since the core part includes the high-Ni-based lithium composite transition metal oxide having the Ni content of 80 mol% or more, high capacity can be ensured.

In the positive electrode active material of the present invention, since the core part including the high-Ni-based lithium composite transition metal oxide having a Ni content of 80 mol% or more is included at a diameter ratio of 0.5 to 0.85 with respect to the total diameter of a particle of the positive electrode active material, high capacity can be ensured. The ratio of the diameter of the core part to the total diameter of a particle of the positive electrode active material is preferably 0.55 to 0.80, and more preferably, 0.55 to 0.70. When the ratio of the diameter of the core part to the total diameter of a particle of the positive electrode active material is less than 0.5, it may be difficult to ensure high capacity, and when the ratio is more than 0.85, structural stability and chemical stability may be decreased, thermal stability may be significantly decreased, stability under high voltage may not be ensured, and a lifespan characteristic may be decreased.

The core part may be an NCM-based lithium composite transition metal oxide including Ni, Co and Mn, an NCA-based lithium composite transition metal oxide including Ni, Co and Al, or a 4-component-based lithium composite transition metal oxide essentially including four elements such as Ni, Co, Mn and Al. As the core part includes Mn and/or Al as well as Ni and Co, structural stability may be highly enhanced, and the lifespan characteristic may be significantly enhanced. Generally, when the lithium composite transition metal oxide includes Mn and/or Al, it may be effective in terms of stability, but disadvantageous in terms of a capacity characteristic and an output characteristic. However, when the composition and structure of the positive electrode active material of the present invention are satisfied, the capacity characteristic may be sufficiently ensured, and the stability and the lifespan characteristic may be significantly enhanced.

The Ni concentration in the core part may be constant and Co, Mn, and Al may also be included at constant concentrations. That is, the core part may be a lithium composite transition metal oxide having no concentration gradient.

Like the core part, the shell part of the positive electrode active material of the present invention may be an NCM-based lithium composite transition metal oxide including Ni, Co and Mn, an NCA-based lithium composite transition metal oxide including Ni, Co and Al, or a 4-component-based lithium composite transition metal oxide essentially including four components such as Ni, Co, Mn and Al.

The shell part has the concentration gradient of a metal component of the lithium composite transition metal oxide, and specifically, the concentration gradient such that the Ni concentration at the start point of the shell part near the core part is 30 mol% or higher than the Ni concentration at the end point of the shell part near the particle surface. More preferably, the Ni concentration at the start point of the shell part may have a concentration gradient such that it is 40 mol% or higher than that at the end point of the shell part, and further more preferably, a concentration gradient such that it is 50 mol% or higher than that at the end point of the shell part. Although the positive electrode active material of the present invention is a lithium composite transition metal oxide with a very high Ni content, since the Ni concentration of the shell part is 30 mol% or higher than that at the end point of the shell part, structural stability and chemical stability may be enhanced, and thermal stability may be significantly improved.

In the present invention, the concentration gradient and concentration of a transition metal in the positive electrode active material may be identified using a method such as electron probe micro analysis (EPMA), inductively coupled plasma-atomic emission spectrometry (ICP-AES), time of flight secondary ion mass spectrometry (ToF-SIMS), EDAX through SEM analysis, or X-ray photoelectron spectroscopy (XPS), and specifically, the atomic ratio of metals may be measured while moving from the center of the positive electrode active material to the surface thereof using EPMA, or the atomic ratio of metals may be measured by performing etching from the surface of the positive electrode active material to the center thereof through XPS.

In an exemplary embodiment of the present invention, the shell part may exhibit a concentration gradient such that the Ni concentration is gradually decreased from the start point of the shell part to the end point of the shell part. Since the Ni concentration at the start point of the shell part is maintained at a high level and gradually decreased toward the end point of the shell part near the surface, thermal stability may be exhibited, and a decrease in capacity may be prevented. Particularly, even though the core part having a very high Ni content is included at a diameter ratio of 0.5 to 0.85, since the shell part has a concentration gradient such that the Ni concentration is gradually decreased to have a difference between the start point of the shell part and the end point thereof of 30 mol% or more, excellent stability may be exhibited.

Meanwhile, the shell part may have a concentration gradient such that the concentration of at least one of Mn and Co is gradually increased from the start point of the shell part to the end point thereof. In this case, since the Mn concentration at the start point of the shell part is maintained at a low level, and the Mn concentration is increased toward the end point of the shell part near the surface, excellent thermal stability may be obtained, and since the Co concentration at the start point of the shell part is maintained at a low level, and increased toward the end point of the shell part near the surface, the amount of Co may be reduced, and a decrease in capacity may also be prevented.

The shell part of the positive electrode active material according to an exemplary embodiment of the present invention has a continuous concentration gradient such that a Ni concentration in the shell part is decreased from the start point of the shell part to the end point thereof near the surface, and a continuous concentration gradient complementary to the Ni concentration gradient, such that at least one of Mn and Co is increased in concentration from the start point of the shell part to the end point thereof near the surface.

In the present invention, the "exhibiting a concentration gradient such that the concentration of a transition metal is gradually changed (increased or decreased)" means that there is a concentration distribution in which the concentration of a transition metal is gradually changed throughout the particles. Specifically, the concentration distribution shows that the difference in transition metal concentration per 1 µm in particles may be 0.1 to 5 mol%, more specifically, 0.1 to 3 mol%, and further more specifically, 1 to 2 mol% based on the total mole number of the corresponding metal included in the positive electrode active material.

According to an exemplary embodiment of the present invention, when the transition metal in the shell part of the positive electrode active material has a concentration gradient such that a concentration is continuously changed, there is no dramatic phase boundary region from the start point of the shell part to the end point thereof, and therefore a crystal structure may be stabilized, and thermal stability may be further increased. In addition, when the slope of the concentration gradient of the transition metal is constant, the effect of improving the structural stability can be further enhanced.

The shell part of the positive electrode active material of the present invention may have an average Ni content of 50 to 90 mol%, and preferably, 60 to 88 mol% among the entire metal elements contained in the lithium composite transition metal oxide. This is the average Ni composition of the entire shell part. Although the average content of Ni in the shell part is high, for example, 50 to 90 mol%, the Ni concentration may be maintained at a high level at the start point of the shell part, and since the Ni concentration is decreased 30 mol% or more toward the end point of the shell part near the surface, the decrease in capacity may be prevented, and excellent thermal stability may be exhibited.

In the case of the positive electrode active material according to an exemplary embodiment of the present invention, a ratio of the thickness of the shell part to the radius of a particle of the positive electrode active material may be 0.15 to 0.5, and preferably 0.2 to 0.45, and more preferably 0.3 to 0.45. When the ratio of the thickness of the shell part to the radius of a particle of the positive electrode active material is less than 0.15, the structural stability and chemical stability are decreased, the thermal stability is significantly decreased, the stability under high voltage is not ensured, and the lifespan characteristic is deteriorated. When the ratio of the thickness of the shell part to the radius of a particle of the positive electrode active material is more than 0.5, it may be difficult to ensure high capacity.

Meanwhile, the shell part of the positive electrode active material according to an exemplary embodiment of the present invention may include lithium composite transition metal oxide particles with crystal orientation radially grown in a direction from the center of the particle of the positive electrode active material to the surface thereof. As the above-described structures of the core part and the shell part are satisfied, the structural stability of the positive electrode active material may be further enhanced, and an output characteristic may be further more improved.

The core and shell parts of the positive electrode active material of the present invention may include a lithium composite transition metal oxide represented by Formula 1.

[Formula 1] LiₚNi_{1-(x1+y1+z1)}Coₓ₁M^{a}_{y1}M^{b}_{z1}M^{c}_{q1}O₂

In this formula, M^{a} is at least one or more elements selected from the group consisting of Mn and Al, M^{b} is at least one or more elements selected from the group consisting of Zr, W, Mg, Al, Ce, Hf, Ta, La, Ti, Sr, Ba, Nb, Mo and Cr, M^{c} is at least one or more elements selected from the group consisting of Al, Zr, Ti, Mg, Ta, Nb, Mo and Cr, and 0.9≤p≤1.5, 0<x1≤0.4, 0<y1≤0.4, 0≤z1≤0.1, 0≤q1≤0.1, and 0<x1+y1+z1≤0.4.

The composition of the lithium composite transition metal oxide of Formula 1 is the total average composition of the core part and the shell part. That is, the positive electrode active material according to an exemplary embodiment of the present invention may consist of the core part including the lithium composite transition metal oxide of Formula 1, and the shell part including the lithium composite transition metal oxide having the average composition of Formula 1.

In the lithium composite transition metal oxide of Formula 1, Li may be included at a content p, that is, 0.9≤p≤1.5. When p is less than 0.9, there is a possibility of capacity being reduced, and when p is more than 1.5, since particles are calcined in the calcination process, it may be difficult to prepare a positive electrode active material. In consideration of a balance of the significant improvement in capacity characteristic of the positive electrode active material according to the control of a Li content and the sintering property in the preparation of the active material, Li is preferably included at a content of 1.0≤p≤1.15.

In the lithium composite transition metal oxide of Formula 1, Ni may be included at a content corresponding to 1-(x1+y1+z1), satisfying, for example, 0.6≤1-(x1+y1+z1)<1. When the Ni content in the lithium composite transition metal oxide of Formula 1 is 0.6 or more, a sufficient Ni amount for contributing to charging and discharging may be ensured to achieve high capacity. More preferably, Ni may be contained at 0.8≤1-(x1+y1+z1)≤0.99. More specifically, the Ni content in the core part may be 0.8≤1-(x1+y1+z1)≤0.99, and the average Ni content in the shell part may be 0.6≤1-(x1+y1+z1)≤0.9.

In the lithium composite transition metal oxide of Formula 1, Co may be included at a content x1, that is, 0<x1≤0.4. When the Co content in the lithium composite transition metal oxide of Formula 1 is more than 0.4, costs may be increased. In consideration of the significant improvement of a capacity characteristic according to the inclusion of Co, Co is more specifically included at 0.05≤x1≤0.2.

In the lithium composite transition metal oxide of Formula 1, M^{a} may be Mn or Al, or Mn and Al, and these metal elements may enhance the stability of the active material, resulting in an improvement of the stability of a battery. In consideration of the effect of improving a lifespan characteristic, M^{a} may be included at a content y1, that is, 0<y1≤0.4. When y1 of the lithium composite transition metal oxide of Formula 1 is more than 0.4, the output characteristic and the capacity characteristic of the battery may be degraded, and M^{a} may be more specifically included at 0.05≤y1≤0.2.

In the lithium composite transition metal oxide of Formula 1, M^{b} may be a doping element included in the crystal structure of the lithium composite transition metal oxide, and M^{b} may be included at a content z1, that is, 0≤z1≤0.1.

In the lithium composite transition metal oxide of Formula 1, the metal element of M^{c} may not be included in the structure of the lithium composite transition metal oxide, and a lithium composite transition metal oxide onto which M^{c} is doped may be prepared by adding an to a precursor and a lithium source and calcining the M^{c} source together with the precursor and the lithium source during mixing and calcination of a precursor and a lithium source, or forming a lithium composite transition metal oxide and then performing calcination with a separately added M^{c} source. M^{c} may be included at a content q1, that is, 0≤q1≤0.1, without degrading the characteristics of the positive electrode active material.

In addition, the positive electrode active material according to an exemplary embodiment of the present invention may further include a surface layer formed on the outer periphery of the shell part. The surface layer may include a lithium composite transition metal oxide including at least one or more selected from the group consisting of Ni, Co, Mn and Al. The concentration of the transition metal in the surface layer may be constant.

In addition, the positive electrode active material may consist of secondary particles in which primary particles of the lithium composite transition metal oxide are agglomerated, and the lithium ion diffusion path in the primary particles may be formed toward the center direction of the secondary particles. That is, the a or b axis in the layered structure of the lithium composite transition metal oxide may be formed in the center direction of the secondary particles. Therefore, the adsorption and release of lithium ions are facilitated, which may be advantageous in terms of the capacity characteristic and the output characteristic.

Afterward, a method of preparing a positive electrode active material for a secondary battery of the present invention will be described.

The method of preparing a positive electrode active material for a secondary battery of the present invention includes: forming a core part by coprecipitating a first precursor-forming solution including a Ni-containing starting material, a Co-containing starting material, and at least one or more selected from the group consisting of a Mn-containing starting material and an Al-containing starting material; forming a shell part by coprecipitating a second precursor-forming solution including a Ni-containing starting material, a Co-containing starting material, and at least one or more selected from the group consisting of a Mn-containing starting material and an Al-containing starting material, wherein the Ni-containing starting material has a lower concentration than that of the first precursor-forming solution; and forming a positive electrode active material including a lithium composite transition metal oxide by forming a positive electrode active material precursor including the core part and the shell part formed around the core part, mixing the positive electrode active material precursor with a lithium source, and calcining the mixture. Here, the ratio of the diameter of the core part to the total diameter of a particle of the positive electrode active material is 0.5 to 0.85, and the shell part has a concentration gradient such that a Ni concentration at the start point of the shell part near the core part is 30 mol% or higher than that at the end point of the shell part near the particle surface.

To prepare the positive electrode active material of the present invention, first, a positive electrode active material precursor including a core part and a shell part is formed. The core part is formed by coprecipitating a first precursor-forming solution including a Ni-containing starting material, a Co-containing starting material, and at least one or more selected from the group consisting of a Mn-containing starting material and an Al-containing starting material, and the shell part is formed by coprecipitation by further adding a second precursor-forming solution including a Ni-containing starting material is further added at a lower concentration than the first precursor-forming solution.

Each of the Ni-containing starting material, the Co-containing starting material, the Mn-containing starting material and the Al-containing starting material may be a Ni-, Co-, Mn- or Al-containing sulfate, halide, acetate, sulfide, hydroxide, oxide or oxyhydroxide, but is not particularly limited thereto as long as it can be dissolved in water. For example, the Ni-containing starting material may be Ni(SO₄)₂ · 7H₂O, NiSO₄, NiCl₂, Ni(OH)₂, or Ni(OCOCH₃)₂ · 4H₂O or Ni(NO₃)₂ · 6H₂O, and any one or a mixture of two or more thereof may be used.

The first and second precursor-forming solutions may be prepared by adding the Ni-containing starting material, the Co-containing starting material, the Mn-containing starting material and the Al-containing starting material to a solvent, specifically, water, or a mixture of water and a uniformly mixable organic solvent (specifically, an alcohol, etc.), or by preparing solutions including respective starting materials and then mixing these solutions together.

A positive electrode active material precursor may be prepared through coprecipitation by adding the precursor-forming solution to a reactor, and adding a chelating agent and a basic aqueous solution.

The chelating agent may be NH₄OH, (NH₄)₂SO₄, NH₄NO₃, NH₄Cl, CH₃COONH₄, or NH₄CO₃, and one or a mixture of two or more thereof may be used. In addition, the chelating agent may be used in the form of an aqueous solution, and the solvent may be water, or a mixture of water and a uniformly mixable organic solvent (specifically, an alcohol, etc.).

The basic compound may be an hydroxide of an alkali metal or alkaline earth metal such as NaOH, KOH or Ca(OH)₂, or a hydrate thereof, and one or a mixture of two or more thereof may be used. The basic compound may also be used in the form of an aqueous solution, and the solvent may be water, or a mixture of water and a uniformly mixable organic solvent (specifically, an alcohol, etc.). Here, the concentration of the basic aqueous solution may be 2 to 10M.

The coprecipitation for preparing the positive electrode active material precursor may be performed under a condition of pH 10 to 12. When the pH is out of the above-mentioned range, the size of the prepared positive electrode active material precursor may be changed or particle splitting may occur. More specifically, the coprecipitation may be carried out under a condition of pH 11 to 12. The pH may be controlled by the addition of a basic aqueous solution.

The coprecipitation for preparing the positive electrode active material precursor may be performed at a temperature range of 30 to 80 °C under an inert atmosphere such as nitrogen. To increase a reaction rate in the reaction, a stirring process may be selectively performed, and the stirring speed may be 100 to 2000 rpm.

The core part may be formed to have a Ni content of 80 mol% or more, and more preferably, 88 mol% or more among the entire metal elements by increasing the concentration of the Ni-containing starting material of the first precursor-forming solution.

Here, the high-Ni core part having a Ni content of 80 mol% or more may be formed to have a diameter ratio of 0.5 to 0.85 with respect to the total particle diameter of the positive electrode active material precursor. The diameter ratio of the core part may be adjusted by controlling a coprecipitation time for forming the positive electrode active material precursor. The coprecipitation time for forming the core part may be 0.5 to 0.85 times, and more preferably 0.6 to 0.8 times, longer than the total coprecipitation time for forming the positive electrode active material precursor. Specifically, the total coprecipitation time for forming the positive electrode active material precursor may be 24 to 40 hours, and here, the coprecipitation time for forming the core part may be 13 to 32 hours, and more preferably, 15 to 25 hours.

The shell part is formed to have a concentration gradient such that the Ni concentration at the start point of the shell part is 30 mol% or higher than that of the end point of the shell part through coprecipitation by further adding a second precursor-forming solution including a Ni-containing starting material at a lower concentration than the first precursor-forming solution. For example, the first precursor-forming solution may have a molar ratio of the Ni salt to the total transition metal salts of 80 mol% or more, and the second precursor-forming solution may have the molar ratio of the Ni salt to the total transition metal salts of less than 80 mol%.

The shell part may be formed to have a concentration gradient such that the Ni concentration is gradually decreased from the start point of the shell part to the end point thereof.

Meanwhile, the second precursor-forming solution may include at least one of the starting materials of Mn and Co at a higher concentration than the first precursor-forming solution. The shell part formed through coprecipitation by further adding the second precursor-forming solution may have a concentration gradient such that the concentration of at least one of Mn and Co is gradually increased from the start point of the shell part to the end point thereof.

The positive electrode active material precursor prepared through coprecipitation may be isolated according to a conventional method, and then a drying process may be selectively performed at 110 to 400 °C for 15 to 30 hours.

Afterward, the positive electrode active material precursor is formed as described above and then mixed with a lithium source, and the mixture is calcined, thereby forming a positive electrode active material including a lithium composite transition metal oxide.

The lithium source may be a lithium-containing sulfate, nitrate, acetate, carbonate, oxalate, citrate, halide, hydroxide or oxyhydroxide, and is not particularly limited thereto as long as it can be dissolved in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, or Li₃C₆H₅O₇, and any one or a mixture of two or more thereof may be used.

Meanwhile, when the precursor is mixed with the lithium source, a calcining agent may be selectively added. The calcining agent may be specifically, an ammonium ion-containing compound such as NH₄F, NH₄NO₃, or (NH₄)₂SO₄; a metal oxide such as B₂O₃ or Bi₂O₃; or a metal halide such as NiCl₂ or CaCl₂, and any one or a mixture of two or more thereof may be used. The calcining agent may be contained at 0.01 to 0.2 mol with respect to 1 mol of the precursor.

In addition, when the precursor is mixed with the lithium source, a water remover may be selectively added. Specifically, the water remover may be citric acid, tartaric acid, glycolic acid or maleic acid, and any one or a mixture of two or more thereof may be used. The water remover may be contained at 0.01 to 0.2 mol with respect to 1 mol of the precursor.

The calcination process may be performed at 700 to 900 °C, and more preferably, 750 to 880 °C. When the calcination temperature is less than 70 °C, due to a residual unreacted raw material, a discharge capacity per unit weight, a cycle characteristic, and an operation voltage may be degraded, and when the calcination temperature is more than 900 °C, due to the production of a by-product, a discharge capacity per unit weight, a cycle characteristic, and an operation voltage may be degraded.

The calcination process may be performed for 5 to 30 hours in an oxidizing atmosphere such as air or oxygen, or in a reducing atmosphere containing nitrogen or hydrogen.

The positive electrode active material prepared as described above may have a ratio of the diameter of the core part to the total diameter of a particle of the positive electrode active material of 0.5 to 0.85, and the shell part has a concentration gradient such that a Ni concentration at the start point of the shell part near the core part is 30 mol% or more higher than that at the end point of the shell part near the particle surface. In addition, the core part may have a Ni content of 80 mol% or more among the total metal elements contained in the lithium composite transition metal oxide, and more preferably, 88 mol% or more.

The positive electrode active material may have a ratio of the diameter of the core part to the total diameter of a particle of the positive electrode active material of 0.5 to 0.85, and a thickness ratio of the shell part to the radius of a particle of the positive electrode active material may be 0.15 to 0.5.

As the positive electrode active material of the present invention has a higher Ni content, high capacity may be realized, the structural stability and the chemical stability may be enhanced, and excellent thermal stability may be ensured.

According to another exemplary embodiment of the present invention, a positive electrode for a lithium secondary battery and a lithium secondary battery including the positive electrode active material prepared as described above are provided.

Specifically, the positive electrode includes a positive electrode current collector, and a positive electrode active material layer which is formed on the positive electrode current collector and includes the positive electrode active material.

In the positive electrode, the positive electrode current collector is not particularly limited as long as it does not cause a chemical change in a battery and has conductivity, and may be stainless steel, aluminum, nickel, titanium, calcined carbon, or aluminum or stainless steel which is surface-treated with carbon, nickel, titanium or silver. In addition, the positive electrode current collector may generally have a thickness of 3 to 500 µm, and the adhesive strength of the positive electrode active material may be increased by forming fine irregularities on the surface of the positive electrode current collector. For example, the positive electrode current collector may be used in various forms such as a film, a sheet, a foil, a net, a porous body, foam, a non-woven fabric, etc.

In addition, the positive electrode active material layer may include a conductive material and a binder as well as the positive electrode active material described above.

Here, the conductive material is used to provide conductivity to an electrode, and is not particularly limited as long as it has electric conductivity without causing a chemical change in a battery. A specific example of the conductive material may be a graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may generally be contained at 1 to 30 wt% with respect to the total weight of the positive electrode active material layer.

In addition, the binder serves to enhance the cohesion between the positive electrode active material particles and the adhesive strength between the positive electrode active material and the positive electrode current collector. A specific example of the binder may be polyvinylidenefluoride (PVDF), vinylidenefluoride-hexafluoropropylene-co-polymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluorine rubber, or various copolymers thereof, and one or a mixture of two or more thereof may be used. The binder may be included at 1 to 30 wt% with respect to the total weight of the positive electrode active material layer.

The positive electrode may be prepared according to a conventional method of preparing a positive electrode, except that the positive electrode active material is used. Specifically, the positive electrode may be prepared by applying a composition for forming a positive electrode active material layer, which includes the positive electrode active material, and selectively, a binder and a conductive material on the positive electrode current collector, and drying and rolling the composition. Here, the types and contents of the positive electrode active material, the binder and the conductive material are as described above.

The solvent may be a solvent generally used in the art, and may be dimethyl sulfoxide (DMSO), isopropyl alcohol, N-methyl pyrrolidone (NMP), acetone or water, and one or a mixture of two or more thereof may be used. The solvent is used at a sufficient amount for dissolving or dispersing the positive electrode active material, the conductive material and the binder in consideration of the coating thickness and production yield of a slurry, and then having a viscosity for exhibiting excellent thickness uniformity in coating for preparing the positive electrode.

As another method, the positive electrode may be prepared by casting the composition for forming the positive electrode active material layer on a separate support, and laminating a film obtained by being delaminated from the support on the positive electrode current collector.

According to still another exemplary embodiment of the present invention, an electrochemical device including the positive electrode is provided. The electrochemical device may be specifically a battery or a capacitor, and more specifically, a lithium secondary battery.

The lithium secondary battery specifically includes a positive electrode, a negative electrode located opposite to the positive electrode, and a separator interposed between the positive electrode and the negative electrode, and an electrolyte, and the positive electrode is as described above. In addition, the lithium secondary battery may selectively include a battery case accommodating an electrode assembly including the positive electrode, the negative electrode and the separator, and a sealing member for sealing the battery case.

In the lithium secondary battery, the negative electrode includes a negative electrode current collector and a negative electrode active material layer located on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel which is surface-treated with carbon, nickel, titanium or silver, or an aluminum-cadmium alloy. In addition, the negative electrode current collector may generally have a thickness of 3 to 500 µm, and like the positive electrode current collector, fine irregularities may be formed on the current collector surface, thereby reinforcing the binding strength of the negative electrode active material. For example, the negative electrode current collector may be used in various forms such as a film, a sheet, a foil, a net, a porous body, foam, a non-woven fabric, etc.

The negative electrode active material layer selectively includes a binder and a conductive material as well as the negative electrode active material. For example, the negative electrode active material layer may be prepared by applying a composition for forming a negative electrode including the negative electrode active material, and selectively a binder and a conductive material on a negative electrode current collector and drying the composition, or casting the composition for forming the negative electrode on a separate support and laminating a film obtained by being delaminated from the support on the negative electrode current collector.

As the negative electrode active material, a compound enabling the reversible intercalation and deintercalation of lithium may be used. A specific example of the negative electrode active material may be a carbon-based material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and undoping lithium such as SiOp (0<β<2), SnO₂, vanadium oxide, or lithium vanadium oxide; or a composite including the metallic compound and the carbon-based material such as a Si-C composite or a Sn-C composite, and any one or a mixture of two or more thereof may be used. In addition, as the negative electrode active material, a metal lithium thin film may be used. In addition, as a carbon material, both of low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high temperature calcined carbon such as petroleum or coal tar pitch derived cokes.

In addition, the binder and the conductive material may be the same as described above for the positive electrode.

Meanwhile, in the lithium secondary battery, a separator is not particularly limited as long as it is generally used in a lithium secondary battery to separate a negative electrode from a positive electrode and provide a moving path for lithium ions, and particularly, the separator has a low resistance to ion mobility of an electrolyte and an excellent ability to be saturated in an electrolyte solution. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator including a ceramic component or a polymer material may be used to ensure thermal resistance or mechanical strength, and may be selectively used in a single- or multilayered structure.

In addition, the electrolyte used in the present invention may be an organic liquid electrolyte, an inorganic liquid electrolyte, a solid polymer electrolyte, a gel-type polymer electrolyte, a solid inorganic electrolyte, or a melt-type inorganic electrolyte, which can be used in production of a lithium secondary battery, but the present invention is not limited thereto.

Specifically, the electrolyte may include an organic solvent and a lithium salt.

The organic solvent is not particularly limited as long as it can serve as a medium enabling the mobility of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate having high ion conductivity and high permittivity to increase the charge/discharge performance of a battery (for example, ethylene carbonate or propylene carbonate) and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of about 1:1 to about 1:9, the electrolyte solution may exhibit excellent performance.

The lithium salt is not particularly limited as long as it is a compound capable of providing a lithium ion used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, or LiB(C₂O₄)₂. The concentration of the lithium salt is preferably in the range of 0.1 to 2.0M. When the concentration of the lithium salt is included in the above-mentioned range, the electrolyte has suitable conductivity and viscosity and thus can exhibit excellent electrolytic performance. Therefore, lithium ions can effectively migrate.

To enhance a lifespan characteristic of the battery, inhibit a decrease in battery capacity, and enhance discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

Since the lithium secondary battery including the positive electrode active material according to the present invention stably exhibits excellent discharge capacity, an excellent output characteristic and a high capacity retention (%), it is useful in portable devices such as a mobile phone, a notebook computer and a digital camera and an electric automobile field such as a hybrid electric vehicle (HEV).

Therefore, according to yet another exemplary embodiment of the present invention, a battery module including the lithium secondary battery as a unit cell, and a battery pack including the same are provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, embodiments of the present invention will be described in detail with reference to the accompanying drawings so that those of ordinary skill in the art can easily carry out the present invention. However, the present invention may be implemented in a variety of different forms, and is not limited to the embodiments described herein.

### Example 1

In a batch-type 5L reactor set to 60 °C, a 2M first precursor-forming solution (S1) was prepared by mixing NiSO₄, CoSO₄, and MnSO₄ in water such that a nickel:cobalt:manganese molar ratio became 95:4:1, and a 2M second precursor-forming solution (S2) was prepared by mixing NiSO₄, CoSO₄, and MnSO₄ in water such that a nickel:cobalt:manganese molar ratio became 40:30:30.

1L of deionized water was added to a coprecipitation reactor (volume: 5L), the reactor was purged with nitrogen gas at a rate of 2L/min to remove oxygen dissolved in water, and a non-oxidizing atmosphere was created in the reactor. Afterward, 10 mL of a 25% NaOH aqueous solution was added, and the solution was stirred at a stirring speed of 1200 rpm at 60 °C to maintain a pH at 12.0.

Afterward, the first precursor-forming solution was added at 180 mL/hr, and 18-hour coprecipitation was performed while a NaOH aqueous solution and a NH₄OH aqueous solution were added simultaneously, thereby forming a core part. Afterward, 12-hour coprecipitation was performed by adding the second precursor-forming solution at 150 mL/hr, thereby forming a shell part.

A particle of a nickel-manganese-cobalt-based composite metal-containing hydroxide, which consists of the core part and shell part, formed thereby, was isolated, cleaned, and dried in an oven at 120 °C, thereby preparing a positive electrode active material precursor.

The positive electrode active material precursor prepared as described above and a lithium source LiOH were added to a Henschel mixer (700L), and mixed at 300 rpm for 20 minutes. The mixed powder was put into an alumina furnace having a size of 330 mm x 330 mm, and calcined under an oxygen (O₂) atmosphere at 780 °C for 21 hours, thereby preparing a positive electrode active material of a lithium composite transition metal oxide.

### Example 2

A positive electrode active material was prepared in the same manner as described in Example 1, except that a 2M first precursor-forming solution (S1) was used by mixing NiSO₄, CoSO₄, and MnSO₄ in water such that a nickel:cobalt:manganese molar ratio became 90:5:5, and the first precursor-forming solution (S1) was coprecipitated for 15 hours, thereby forming a core part.

### Comparative Example 1

A positive electrode active material was prepared in the same manner as described in Example 1, except that only a 2M first precursor-forming solution (S1) was used after mixing NiSO₄, CoSO₄, and MnSO₄ in water such that a nickel:cobalt:manganese molar ratio became 86:10:4, and the first precursor-forming solution (S1) was coprecipitated for 25 hours, thereby forming a positive electrode active material precursor, and a positive electrode active material was prepared using the same.

### Comparative Example 2

A positive electrode active material was prepared in the same manner as described in Example 1, except that a second precursor-forming solution (S2) in which NiSO₄, CoSO₄, and MnSO₄ were mixed in a nickel:cobalt:manganese nickel:cobalt:manganese molar ratio of 70:10:20 was used.

### Comparative Example 3

A positive electrode active material was prepared in the same manner as described in Example 1, except that a core part was formed by coprecipitating a first precursor-forming solution (S1) for 10 hours, and a shell part was formed by adding a second precursor-forming solution (S2) at 150 ml/hr and performing coprecipitation for 15 hours.

### Comparative Example 4

A positive electrode active material was prepared in the same manner as described in Example 1, except that a core part was formed by coprecipitating a first precursor-forming solution (S1) for 10 hours, and a shell part was formed by inputting a second precursor-forming solution (S2) in which NiSO₄, CoSO₄, and MnSO₄ were mixed in a nickel:cobalt:manganese nickel:cobalt:manganese molar ratio of 70:10:20 at 180 mL/hr and performing coprecipitation for 15 hours.

### Comparative Example 5

A positive electrode active material was prepared in the same manner as described in Example 1, except that a core part was formed by coprecipitating a first precursor-forming solution (S1) in which NiSO₄ and CoSO₄ were mixed in a nickel:cobalt molar ratio of 90:10 for 23 hours, and a shell part was formed by coprecipitating a second precursor-forming solution (S2) for 2 hours.

### [Experimental Example 1: Analysis of positive electrode active materiall

To confirm the proportions of the core part and the shell part and the Ni concentration difference in the shell part of the positive electrode active materials prepared in Examples 1 and 2 and Comparative Examples 1 to 5, each of the positive electrode active materials prepared according to the examples and the comparative examples was subjected to ion milling to make a particle have a cross-section, and the composition from the surface to the center of the particle was identified through electron probe microanalyzer (EPMA) analysis. The results are shown in Table 1.

**[Table 1]**

| | Proportions of core part and shell part | | Change in Ni concentration of shell part | | |
|---|---|---|---|---|---|
| | Core part | Shell part | Start point of shell part (mol%) | End point of shell part (mol%) | Concentration difference (mol%) |
| Example 1 | 65 | 35 | 95 | 40 | 55 |
| Example 2 | 55 | 45 | 90 | 40 | 50 |
| Comparative Example 1 | Same composition in entire particle | | Same Ni composition :86 mol% | | |
| Comparative Example 2 | 65 | 35 | 95 | 70 | 25 |
| Comparative Example 3 | 40 | 60 | 95 | 40 | 55 |
| Comparative Example 4 | 40 | 60 | 95 | 70 | 25 |
| Comparative Example 5 | 90 | 10 | 90 | 40 | 50 |

In Table 1, the proportion of the core part represents a ratio of the diameter of the core part to the diameter of the entire particle, and the proportion of the shell part represents a ratio of the thickness of the shell part to the radius of the particle. Referring to Table 1, in Example 1 and Example 2, the proportion of the core part is 0.5 to 0.85 with respect to the diameter of the entire particle, and the Ni concentration difference between the start point of the shell part and the end point thereof is 30 mol% or more. The shell part in each of Example 1 and Example 2 had a concentration gradient such that the Ni concentration is gradually decreased from the start point to the end point of the shell part.

Meanwhile, Comparative Example 1 showed a positive electrode active material in which the entire particle was prepared with the same composition of LiNi_{0.86}Co_{0.1}Mn_{0.04}O₂, and Comparative Example 2 showed that a Ni concentration difference between the start point of the shell part and the end point thereof was less than 30 mol%. In Comparative Example 3 and Comparative Example 4, the proportion of the core part of less than 0.5, and in Comparative Example 4, a Ni concentration difference between the start point of the shell part and the end point thereof was less than 30 mol%. In Comparative Example 5, the proportion of the core part was more than 0.85, and the proportion of the shell part was 0.1.

### [Experimental Example 2: Evaluation of charge/discharge capacity and leakage current]

A positive electrode mix (viscosity: 5000 mPa•s) was prepared by mixing each of the positive electrode active materials prepared according to Examples 1 and 2 and Comparative Examples 1 to 5, a carbon black conductive material and a PVdF binder in an N-methylpyrrolidone solvent in a weight ratio of 96.5:1.5:2, applied to one surface of an aluminum current collector, dried at 130 °C and rolled, thereby preparing a positive electrode. As a negative electrode, a lithium metal was used.

An electrode assembly was prepared by interposing a separator formed of porous polyethylene between the positive electrode and the negative electrode, which are formed as described above, and located in a case, and an electrolyte solution was injected into the case, thereby producing a lithium secondary battery. Here, the electrolyte solution was prepared by dissolving 1.0M lithium hexafluorophosphate (LiPF₆) in an organic solvent consisting of ethylene carbonate/dimethyl carbonate/ethyl methyl carbonate (mixing volume ratio of EC/DMC/EMC=3/4/3).

Charging/discharging experiments were performed on each lithium secondary battery cell (half cell) produced by using each of the positive electrode active materials prepared according to Examples 1 and 2 and Comparative Examples 1 to 5. Specifically, charging/discharging was performed at 0.1C/0.1C and 50 °C, and then charging was performed at 0.1 C in a CCCV mode until a voltage of 4.7V, and was set to be terminated 130 hours later. Meanwhile, a leakage current was measured for 130 hours, and the results are shown in Table 2 and FIG. 1 below.

**[Table 2]**

| | Charge capacity/discharge capacity (mAh/g) | Average leakage current (mAh/hr, 130hr) |
|---|---|---|
| Example 1 | 232/207 | 0.00 |
| Example 2 | 230/205 | 0.06 |
| Comparative Example 1 | 229/203 | 0.46 |
| Comparative Example 2 | 231/207 | 0.09 |
| Comparative Example 3 | 229/204 | 0.25 |
| Comparative Example 4 | 230/205 | 0.32 |
| Comparative | 232/207 | 0.55 |
| Example 5 | | |

Referring to Table 2 and FIG. 1, it can be confirmed that, in Examples 1 and 2, both of the core part and the shell part include Ni, Co, and Mn, the ratio of the core part to the total diameter of the particle was 0.5 to 0.85, the Ni concentration difference between the start point of the shell part and the end point thereof was 30 mol% or more, excellent charge/discharge capacity was exhibited, and almost no leakage current was generated.

On the other hand, compared with Examples 1 and 2, it can be seen that Comparative Example 1 was slightly decreased in capacity and the 130-hour leakage current was significantly increased. In Comparative Example 1, since there was no shell part having the Ni concentration difference of 30 mol%, stability was decreased. In addition, although the capacity of Comparative Example 2 was the same as those of Examples 1 and 2, referring to FIG. 1, Comparative Example 2 had a higher leakage current as a whole than those of Examples 1 and 2. This is because, in Comparative Example 2, since the Ni concentration difference in the shell part is less than 30 mol%, sufficient stability was not ensured. In addition, in Comparative Examples 3 and 4, the ratio of the core part is less than 0.5, the charge/discharge capacity was decreased, and the leakage current for 130 hours was significantly increased, compared with Examples 1 and 2. In addition, in Comparative Example 5, since the core part included only Ni and Co, and the ratio of the core part is more than 0.85, the charge/discharge capacity was highly increased, but the leakage current for 130 hours was significantly increased.

### [Experimental Example 3: Evaluation of lifespan characteristic]

Like Experimental Example 2, each lithium secondary battery cell (half cell) was produced using each of the positive electrode active materials prepared according to Examples 1 and 2 and Comparative Examples 1 to 5, and then 30 cycles of charging/discharging were performed to measure capacity retention [%], in which each cycle including charging at 45 °C in a CCCV mode until 0.33C and 4.25V, cutting off under a condition of 0.005C, and discharging at a constant current of 0.33C until 2.5V. The result is shown in Table 3.

**[Table 3]**

| | Capacity retention (%) (45 °C, 30 cycles) |
|---|---|
| Example 1 | 96.0 |
| Example 2 | 96.8 |
| Comparative Example 1 | 95.2 |
| Comparative Example 2 | 94.0 |
| Comparative Example 3 | 96.5 |
| Comparative Example 4 | 96.1 |
| Comparative Example 5 | 89.0 |

Referring to Table 3, Examples 1 and 2 in which both of the core part and the shell part include Ni, Co, and Mn, the ratio of the core part is 0.5 to 0.85 with respect to the total diameter of the particle, and the Ni concentration difference between the start point of the shell part and the end point thereof is 30 mol% or more exhibited a very excellent high-temperature lifespan characteristic.

On the other hand, Comparative Examples 1 and 2 were decreased in a lifespan characteristic, compared with Examples 1 and 2. In Comparative Example 1, since a shell part having the Ni concentration difference of 30 mol% was not formed, stability was decreased, and in Comparative Example 2, since the Ni concentration difference in the shell part is less than 30 mol%, sufficient stability was not ensured. In addition, in the case of Comparative Example 5, in which the core part includes only Ni and Co, and the ratio of the core part is more than 0.85, the lifespan characteristic was significantly decreased, compared with Examples 1 and 2. This is because, since there was no Mn/Al in the core part, structural stability was decreased, and since the shell part had a small thickness, sufficient surface stability and thermal stability could not be ensured.

## Claims

1. A positive electrode active material for a secondary battery, comprising:
a core part and a shell part formed around the core part,
wherein the core part and the shell part include a lithium composite transition metal oxide, which includes Ni and Co, and at least one or more selected from the group consisting of Mn and Al,
a ratio of the diameter of the core part to the total diameter of a particle of the positive electrode active material is 0.5 to 0.85, and
the shell part has a concentration gradient such that a Ni concentration at the start point of the shell part near the core part is 30 mol% or higher than that at the end point of the shell part near the particle surface.

2. The positive electrode active material according to claim 1, wherein, in the core part, a Ni content is 80 mol% or more among the total metal elements contained in the lithium composite transition metal oxide.

3. The positive electrode active material according to claim 1, wherein, in the core part, a Ni content is 88 mol% or more among the total metal elements contained in the lithium composite transition metal oxide.

4. The positive electrode active material according to claim 1, wherein the Ni concentration in the core part is constant.

5. The positive electrode active material according to claim 1, wherein the shell part has a concentration gradient such that the Ni concentration is gradually decreased from the start point of the shell part to the end point thereof.

6. The positive electrode active material according to claim 1, wherein, in the shell part, a Ni content is 50 to 90 mol% among the total metal elements contained in the lithium composite transition metal oxide.

7. The positive electrode active material according to claim 1, wherein the shell part includes lithium composite transition metal oxide particles with crystal orientation radially grown in a direction from the center to the surface of the particle of the positive electrode active material.

8. The positive electrode active material according to claim 1, wherein the ratio of the thickness of the shell part to the radius of the particle of the positive electrode active material is 0.15 to 0.5.

9. The positive electrode active material according to claim 1, wherein the core part and the shell part include a lithium composite transition metal oxide represented by Formula 1 below:
[Formula 1] LipNi_{1-(x1+y1+z1)}Coₓ₁M^{a}_{y1}M^{b}_{z1}M^{c}_{q1}O₂
where M^{a} is at least one or more elements selected from the group consisting of Mn and Al, M^{b} is at least one or more elements selected from the group consisting of Zr, W, Mg, Al, Ce, Hf, Ta, La, Ti, Sr, Ba, Nb, Mo, and Cr, M^{c} is at least one or more elements selected from the group consisting of Al, Zr, Ti, Mg, Ta, Nb, Mo and Cr, 0.9≤p≤1.5, 0<x1≤0.4, 0<y1≤0.4, 0≤z1≤0.1, 0≤q1≤0.1, and 0<x1+y1+z1≤0.4.

10. The positive electrode active material according to claim 1, further comprising a surface layer formed on the outer periphery of the shell part,
wherein the surface layer includes a lithium composite transition metal oxide including at least one or more selected from the group consisting of Ni, Co, Mn and Al, and the concentration of the transition metal in the surface layer is constant.

11. The positive electrode active material according to claim 1, wherein the positive electrode active material consists of a secondary particle in which primary particles of the lithium composite transition metal oxide are agglomerated, and
a lithium ion diffusion path in the primary particle is formed toward the center of the secondary particle.

12. A method of preparing a positive electrode active material for a secondary battery, comprising:
forming a core part by coprecipitating a first precursor-forming solution including a Ni-containing starting material, a Co-containing starting material, and at least one or more selected from the group consisting of a Mn-containing starting material and an Al-containing starting material;
forming a shell part by coprecipitating a second precursor-forming solution including a Ni-containing starting material, a Co-containing starting material, and at least one or more selected from the group consisting of a Mn-containing starting material and an Al-containing starting material, the Ni-containing starting material having a lower concentration than that of the first precursor-forming solution; and
forming a positive electrode active material including a lithium composite transition metal oxide by forming a positive electrode active material precursor including the core part and the shell part formed around the core part, mixing the positive electrode active material precursor with a lithium source, and calcining the mixture,
wherein the ratio of the diameter of the core part to the total diameter of a particle of the positive electrode active material is 0.5 to 0.85, and
the shell part has a concentration gradient such that a Ni concentration at the start point of the shell part near the core part is 30 mol% or higher than that at the end point of the shell part near the particle surface.

13. The method according to claim 12, wherein a coprecipitation time for forming the core part is 0.5 to 0.85 times longer than the entire coprecipitation time for forming the positive electrode active material precursor.

14. The method according to claim 12, wherein a coprecipitation time for forming the core part is 13 to 32 hours.

15. The method according to claim 12, wherein, in the core part, a Ni content is 80 mol% or more among the total metal elements.

16. The method according to claim 12, wherein the shell part has a concentration gradient such that the Ni concentration is gradually decreased from the start point of the shell part to the end point thereof.

17. The method according to claim 12, wherein a ratio of the thickness of the shell part to the radius of the particle of the positive electrode active material is 0.15 to 0.5.

18. A positive electrode for a secondary battery, comprising the positive electrode active material according to any one of claims 1 to 11.

19. A lithium secondary battery comprising the positive electrode according to claim 18.
